## Europäisches Patentamt
## European Patent Office
## Office européen des brevets

(11) Publication number: **0 212 756**
A2

# EUROPEAN PATENT APPLICATION

(21) Application number: **86201426.3**

(22) Date of filing: **15.08.86**

(51) Int. Cl.⁴: **G 02 B 6/38**

(30) Priority: **16.08.85 US 766909**

(43) Date of publication of application: **04.03.87**
**Bulletin 87/10**

(84) Designated Contracting States: **AT BE CH DE FR GB IT LI LU NL SE**

(71) Applicant: **AUGAT INC., 89 Forbes Boulevard, Mansfield Massachusetts 02048 (US)**

(72) Inventor: **Bertoglio, Guido, Via Del Pino 7, CH-6962 Viganello (CH)**

(74) Representative: **Smulders, Theodorus A.H.J. et al, Vereenigde Octrooibureaux Nieuwe Parklaan 107, NL-2587 BP 's-Gravenhage (NL)**

(54) **Fiber optic connector with a grooved alignment sleeve.**

(57) A fiberoptic connector which includes a housing having a bore therethrough in which a sleeve is disposed of cylindrical configuration having three or more inwardly directed beams each formed by a pair of circumferentially spaced slots in the sleeve wall extending longitudinally along the sleeve. A ferrule with an optical fiber affixed therein is fitted into each end of the sleeve, the confronting ends of the ferrules being radially aligned by action of the circumferentially spaced beams of the sleeve, and axially aligned by the ends of the sleeve in abutment with shoulder portions of respective ferrules.

Title: Fiber optic connector with a grooved   alignment sleeve

## FIELD OF THE INVENTION

This invention relates to fiberoptic connectors and more particularly to a connector having an improved sleeve for maintaining confronting ferrules in alignment.

## BACKGROUND OF THE INVENTION

Fiberoptic connectors are employed to interconnect separate optical fibers to provide optical transmission therebetween. The important operational requirement of such connectors is the maintenance of accurate alignment between the confronting ends of the separate fibers to provide efficient optical coupling and minimize the loss of signal intensity which can be caused by misalignment between the confronting fibers.

In many fiberoptic connectors, the end of each optical fiber to be connected is mounted within a ferrule which is of generally tubular configuration having a small opening at an end in which the end of the optical fiber is disposed. The end of the optical fiber is usually cut and polished to be substantially flush with the end or tip surface of the ferrule. The ferrules of two optical fibers to be interconnected are disposed and retained in a connector housing which includes means for maintaining the two ferrules in aligned relationship both axially and radially to provide an intended optical alignment between the confronting ends of the respective fibers. Proper optical alignment requires that the fibers be centered on a common axis and that the fiber ends be spaced from each other by a precise small distance. Axial alignment is often provided by elements within the housing  which are cooperative with portions of the ferrules to maintain an intended axial position to achieve an intended gap between the confronting ends of the ferrules and their optical fibers.

Radial alignment is also provided by cooperation between the ferrules or portions of the ferrules and constituents of the housing. A sleeve is often employed in the connector housing into which the ferrules are installed, the sleeve serving to provide radial alignment of the ferrules and optical fibers to achieve the intended coaxial position.

In general, connectors of known construction which provide reliable and precise alignment are relatively expensive and complex in design, fabrication or both. Connectors of relatively simple design and/or construction, while being substantially less expensive than the more complex varieties, do not provide the precise degree of alignment or reliability of performance necessary for many optical communication purposes. The evolution of fiberoptic connector design is toward connectors which are relatively simple to manufacture at reasonable cost and which are capable of achieving high reliability and performance.

## SUMMARY OF THE INVENTION

The present invention provides a fiberoptic connector and connector sleeve which achieves the objectives of ease of fabrication, reasonable cost and accurate and repeatable alignment of optical fibers. The connector includes a housing having a bore therethrough in which is disposed a sleeve of cylindrical configuration having three or more inwardly directed beams each formed by a pair of circumferentially spaced slots in the sleeve wall extending longitudinally along the sleeve. A ferrule with an optical fiber affixed therein is fitted into each end of the sleeve, the confronting ends of the ferrules being aligned by action of the circumferentially spaced beams of the sleeve, and axial alignment being provided by the ends of the sleeve in abutment with shoulder portions of respective ferrules. The ferrules are retained on the housing by respective lock nuts or other suitable securing means. The sleeve has an inside diameter in relation to the outside diameter of the ferrules to provide a loose sliding fit between the ferrules and the portions of the sleeve outbound from the beams.

The effective inner diameter of the central portion of the sleeve containing the inwardly directed beams provides an interference against the urging of the beams to provide accurate radial positioning and alignment of the confronting ferrules and of the optical fibers carried thereby.

## DESCRIPTION OF THE DRAWINGS

The invention will be more fully understood from the following detailed description taken in conjunction with the accompanying drawings, in which :

Fig. 1 is an exploded pictorial view of a fiberoptic connector embodying the invention;

Fig. 2 is a cross-sectional view taken along lines 2-2 of Fig. 1 illustrating the construction of the sleeve;

Fig. 3 is a sectionalized elevation view of the fiberoptic connector embodying the invention in assembled form; and

Fig. 4 is a pictorial view of an alternative embodiment of the sleeve.

## DETAILED DESCRIPTION OF THE INVENTION

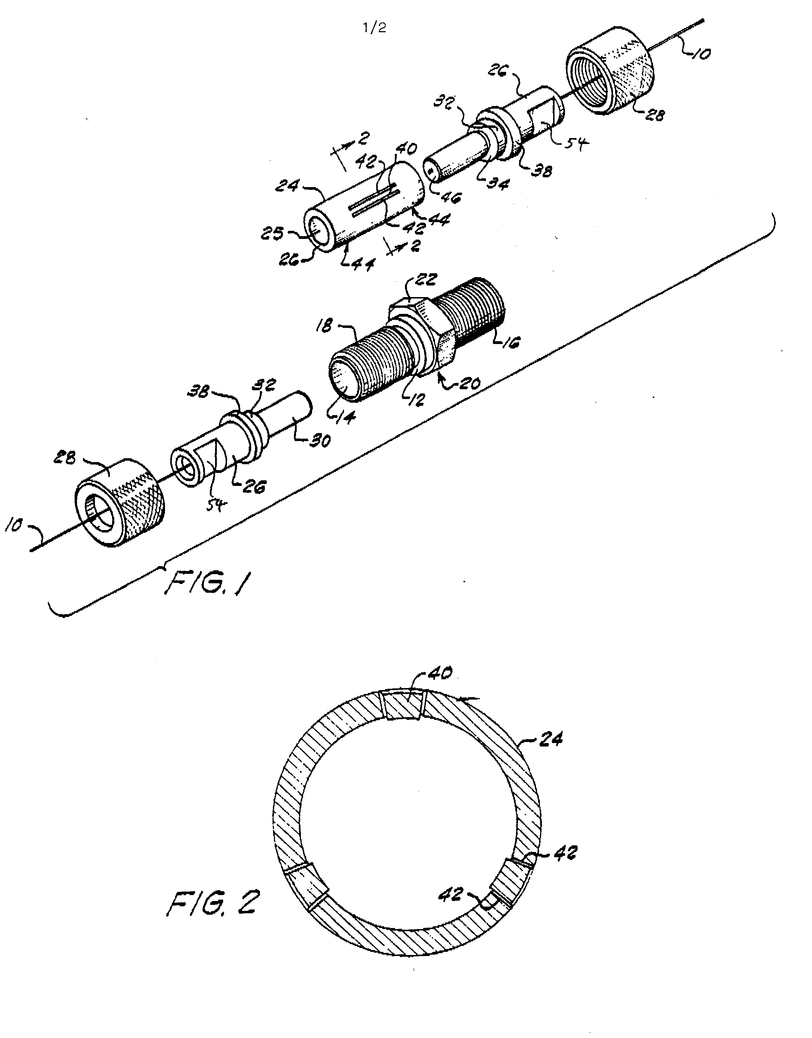

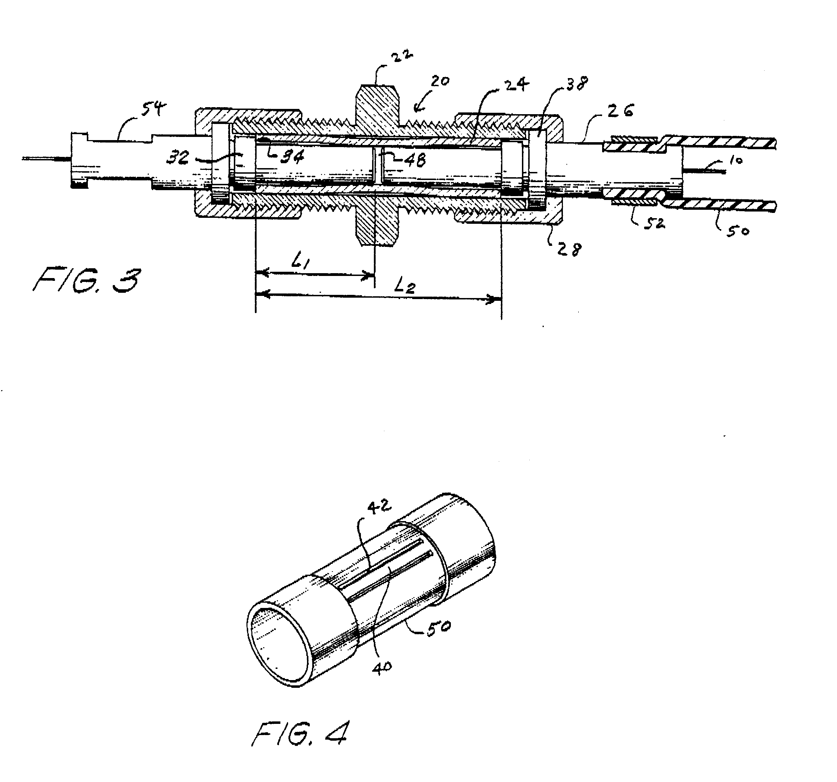

Referring to Fig. 1, there is shown a fiberoptic connector for interconnecting two confronting ends of respective optical fibers 10 and comprising a housing 12 having a cylindrical bore 14 therethrough respective threaded ends 16 and 18, and an intermediate enlarged portion 20 having an integral hex nut 22 thereon. A cylindrical sleeve 24 is slideably disposed within the cylindrical bore 14 of the housing and has a cylindrical bore 25 into which are inserted from respective ends, first and second ferrules 26 to which respective optical fibers 10 are joined. Each ferrule is secured to the respective end of the housing by a threaded nut 28 cooperative with the corresponding threaded end of the housing. Each nut 28 is operative to maintain the ferrule in butting engagement with the confronting end of the housing, as seen in Fig. 3.

The fiberoptic cable includes, in a typical form, an optical fiber having a protective covering thereon, usually in the form of
one or more plastic layers, and a surrounding jacket, also usually
of a plastic material and which may include reinforcing strands
longitudinally disposed along the length of the jacket and
embedded in the jacket wall. The end of the optical fiber is disposed
within a ferrule and has its ends disposed and secured within an
opening provided in the ferrule tip. The connection of the optical
fiber to the ferrule can be accomplished in well-known manner.
Typically, the plastic covering on the optical fiber is
stripped from the end portion of the fiber, and the fiber is threaded
through the bore of the ferrule, with the stripped end of the fiber
extending through the  opening in the tip of the ferrule. The fiber
is secured to the ferrule end by a suitable adhesive, and the fiber
is then cut flush with the ferrule tip and polished to provide an
optically finished end. As seen in Fig.3, the jacket 50 can be secured
to the ferrule 26 by means of a crimp ring 52 which is crimped over
the flats 54 at the rearward end of the ferrule.

The ferrules 26 each include a cylindrical portion 30 sized
to slideably fit within the bore 25 of the sleeve 24, a collar portion
32 having a diameter substantially equal to that of the sleeve and an
end fave 34 aburrable with the sleeve end 36, and a larger diameter
flange portion 38 which is cooperative  with the lock nut 28 for
securing the ferrule to the connector housing. The outer end portion
of the ferrule is configured to be secured to the jacket of the
fiberoptic cable.

As seen in Figs.1-3, the sleeve includes three inwardly
disposed beams 40 equispaced circumferentially around the sleeve, and
each formed by a pair of longitudinal slots 42 cut or otherwise
provided through the wall of the sleeve in the central region thereof.
The beams extend into the bore 25 of the sleeve by substantially the
same amount to define a central area of smaller effective inner
cross-sectional area or diameter than the inner cross-sectional
area or diameter of the outer portions 44 of the sleeve outside of the
central area of the beams. Each ferrule end 30 has a diameter to fit
into the bore 25 of the sleeve with a slideable fit. The inwardly disposed
beams 40 provide an interference fit with the confronting ends of the ferrules upon insertion into the sleeve, and provide accurate centering of the respective ferrules to maintain accurate radial alignment of the confronting ends of the optical fibers, each of which is concentrically disposed within a respective ferrule tip . Each ferrule has an accurate dimension ($L_1$) between the end face 35 and the ferrule tip 46 which is slightly less than one-half the length ($L_2$) between end faces of the sleeve, such that a precise gap 48 is provided between the confronting ferrule tips in order to maintain an intended and repeatable gap between the optical fiber ends. Thus, the sleeve, in cooperation with the associated ferrules, provides the precise gap between optical fibers and also provides the precise radical alignment of the fibers for efficient optical transmission.

An alternate embodiment of the sleeve is shown in Fig. 4 and includes a central recessed circumferential area 50 in which the longitudinal slots 42 are provided such that the beams 40 are disposed in this area. This recessed area provides clearance space for outward movement of the beams upon insertion of the ferrules.

The assembled connector is shown in Fig. 3, where it is seen that each ferrule 26 is inserted in a respective end of the sleeve 24, with a predetermined gap 48 between the ferrule tips. The face 34 of each ferrule collar 32 abuts the corresponding end 36 of the sleeve 24 upon seating of the ferrule in the sleeve. The larger collar 38 of each ferrule confronts a respective end of housing 20 and is cooperative with lock nut 28 to secure the ferrule to the housing. The housing length is slightly less than the distance between confronting faces of the collars 38 to provide a small space between the collars and housing ends. This avoids possible interference with the abutting engagement of the collars 32 and sleeve 24.

The housing can be mounted to a panel or other surface via a hole in the panel through which threaded end 16 or 18 is inserted and fstened by a cooperative nut.

The sleeve can be easily fabricated of a variety of materials. In the presently preferred embodiment, the sleeve is brass and the slots are saw cut through the sleeve wall to provide the circumferentially spaced beams. The sleeve is typically fabricated by providing a precision bore through a brass rod, cutting the longitudinal slots through the wall of the tube, grinding the outside of the tube to an intended outside diameter, and grinding the ends of the tube to the intended length. The overall length of the sleeve is of sufficient precision in relation to the associated ferrules to provide the intended gap between the ferrule tips when installed in the sleeve.

The invention is not to be limited by what has been particularly shown and described, except as indicated in the appended claims.

CLAIMS

1.      A fiberoptic connector comprising:

a housing having a bore therethrough;

a sleeve slideably disposed in the bore of the housing and having a bore therethrough and at least three inwardly disposed beams equally spaced circumferentially around the sleeve;

first and second ferrules each having an optical fiber mounted therein, and an end portion slideable in the bore of the sleeve with a loose fit between the ferreule and teh portions of the sleeve outbound from the beams and an interference fit between the ferrules and the beams to provide radial alignment of the ferrules and optical fibers carried thereby, and a flange abutting an end of the housing to provide axial alignment of the ferrules to provide a predetermined gap between confronting ferrule tips.

2.      The invention of claim 1 wherein the sleeve includes for each of the beams, a pair of slots provided in the wall of the sleeve, the slots being circumferentially spaced and extending longitudinally along the sleeve.

3.      The invention of claim 1 wherein each ferrule includes a surface which abuts a respective end of the sleeve, and wherein the sleeve has a length greater than the  length between the ferrule surfaces to provide a predetermined gap between the confronting ferrule tips in the sleeve.

4.      The invention of claim 3 further including means for securing each of the ferrules to the housing.

5.      The invention of claim 4 wherein the securing means includes a lock nut threadably attached to a threaded end portion of the housing.

6.      The invention of claim 1 wherein each ferrule includes:

a cylindrical portion insertable in the sleeve;

a first collar portion having a face abuttable with an end of the sleeve; and

a second collar portion cooperative with a lock nut to secure the ferrule to the housing.

7.      The invention of claim 6 wherein the length of the cylindrical portion is less than one-half the length of the sleeve.

8.      The invention of claim 2 wherein the sleeve includes a recessed central portion having an outside diameter less than the outside diameter of the outer portions of the sleeve and in which the slots and beams are disposed.

9.      The invention of claim 6 wherein the sleeve has a length in relation to the ferrule portions insertable in the sleeve to provide a predetermined gap between the confronting end faces of the ferrules.

10.     For use in a fiberoptic connector having a housing adapted to contain a pair of ferrules each having an optical fiber secured therein in confronting optical alignment, means for retaining the ferrules in accurate alignment comprising:

        a sleeve of cylindrical configuration and having a cylindrical bore therethrough disposable in the connector housing and includign three or more beams each inwardly directed into the bore of the sleeve to provide a central region of the sleeve having an effective cross-section smaller than the cross-section of the bore of the sleeve outside of the central region;

        the smaller cross-section of the sleeve in the central region of the beams being sized in relation to the cross-section of the ferrule portion insertable in the sleeve to provide radial alignment of the ferrules and the associated optical fibers.

11.     The invention of claim 10 wherein the sleeve includes for each of the beams, a pair of slots provided in the wall of the sleeve, the slots being circumferentially spaced and extending longitudinally along the sleeve.

12.     The invention of claim 10 wherein the sleeve includes a recessed central portion having an outside diameter less than the outside diameter of the outer portions of the sleeve and in which the slots and beams are disposed.

AK

FIG. 1

FIG. 2

FIG. 3

FIG. 4